# EUROPÄISCHE PATENTSCHRIFT

(11) **EP 2 912 652 B1**
(45) Veröffentlichungstag und Bekanntmachung des Hinweises auf die Patenterteilung: **23.02.2022**
(21) Anmeldenummer: 13779796.5
(22) Anmeldetag: 17.10.2013
(51) Int. Cl.: G09F 21/04, G09F 19/14, G09F 19/18

(54) **VERFAHREN ZUR RICHTUNGSADAPTIVEN SIGNALISIERUNG**
METHOD FOR DIRECTION-ADAPTIVE SIGNALING
PROCÉDÉ DE SIGNALISATION ADAPTABLE À LA DIRECTION

(30) Priorität: 25.10.2012 DE 102012219574
(43) Veröffentlichungstag der Anmeldung: 02.09.2015
(73) Patentinhaber: Bayerische Motoren Werke Aktiengesellschaft, 80809 München (DE)
(72) Erfinder: AUGST, Alexander, 80937 Muenchen (DE)
(86) Internationale Anmeldenummer: PCT/EP2013/071679
(87) Internationale Veröffentlichungsnummer: WO 2014/063978

(56) Entgegenhaltungen:
- EP-A2- 1 334 871
- WO-A1-2011/090417
- DE-A1-102006 050 548
- DE-A1-102008 061 747
- FR-A1- 2 949 725

## Beschreibung

Die Erfindung betrifft ein Verfahren zur richtungsadaptiven Signalisierung durch ein Fahrzeug und eine Vorrichtung zu demselben Zweck.

Heutzutage sind die Möglichkeiten der optischen Kommunikation von Verkehrsteilnehmern untereinander basierend auf technischen Hilfsmitteln beschränkt. Diese umfassen im Wesentlichen die Nutzung von Blinkern sowie dem Fernlicht. Vereinzelt verfügen Spezialfahrzeuge oder Einsatzfahrzeuge über gewöhnliche Anzeigetafeln, die kurze Texte oder Symbole wie "Bitte folgen." darstellen können.

Die Aufgabe an den Erfinder ist die Verbesserung der technischen Hilfsmittel, mit denen anderen Verkehrsteilnehmern gezielt Botschaften übermittelt werden können.

Die Aufgabe wird durch ein Verfahren zur richtungsabhängigen Signalisierung insbesondere durch ein Fahrzeug nach Anspruch 1 und eine Vorrichtung zu demselben Zweck nach Anspruch 15 gelöst.

In einem Aspekt umfasst ein Verfahren zur richtungsadaptiven Signalisierung, insbesondere durch ein Fahrzeug: Anzeigen einer graphischen Botschaft, wobei die grafische Botschaft von außerhalb des Fahrzeugs sichtbar ist und im Wesentlichen nur aus einem Raumwinkel sichtbar ist, Verändern des Raumwinkels in zumindest einem Winkelparameter während des Betriebs. Der Raumwinkel kann zumindest in einem Parameter verändert werden, während die grafische Botschaft für den Beobachter sichtbar ist beziehungsweise während des Anzeigens der graphischen Botschaft. Beispielsweise wird dabei während des Anzeigens der grafischen Botschaft, z.B. in einem kurzen Intervall zwischen zwei Einzelbildern zumindest ein Winkelparameter verändert.

Auf diese Weise kann einem anderen Verkehrsteilnehmer (anderen Fahrer, Fußgänger, Zweitradfahrer) beim Blick auf das Fahrzeug eine speziell für ihn bestimmte grafische Botschaft (Fahrzeugsignale, Symbole) angezeigt werden. Jeder Verkehrs-<1> Aus dem Stand der Technik sind die Dokumente EP 1334871 A2, DE 10 2008 061747 A1, FR 2 949 725 A1 bekannt, die sich mit der Signalisierung im Straßenverkehr beschäftigen. Das Dokument WO 2011/090417 A1 offenbart ein Warnvorrichtung für LKW, um anderen Verkehrsteilnehmern zu signalisieren, dass sie sich im "Blind Spot" des LKW befinden. teilnehmer kann eine grafische Botschaft angezeigt bekommen, die auf ihn zugeschnitten ist, ohne dass weitere Verkehrsteilnehmer die grafische Botschaft wahrnehmen könnten. Somit können Missverständnisse vermieden werden, sowie unbeteiligte Verkehrsteilnehmer vor einer Überreizung durch für sie nicht relevante Informationen geschützt werden. So kann das Fahrzeug, z.B. auch bei einer automatisch veranlassten Vollbremsung rechtzeitig ein Signal speziell in Richtung eines anderen Verkehrsteilnehmers anzeigen, um mögliche Folgen dieses Eingriffs zu minimieren. Für andere Verkehrsteilnehmer entstehen keine Nebenwirkungen. Die weiteren Verkehrsteilnehmer werden durch für sie nicht bestimmte grafische Botschaften nicht abgelenkt und unterliegen auch nicht der Möglichkeit eine grafische Botschaft falsch zu interpretieren, da sie sie nicht sehen.

Gleichzeitig ermöglicht das Verfahren das Nachführen der grafischen Botschaft. Verkehrsteilnehmer bewegen sich in den meisten Situationen relativ zueinander. Dabei kann der Fall auftreten, dass sich der die grafische Botschaft betrachtende Verkehrsteilnehmer aus dem Raumwinkel herausbewegt, in dem für ihn die grafische Botschaft angezeigt wird. Gemäß den offenbarten Verfahren ist es nun möglich, die Anzeige der grafischen Botschaft nachzuführen, so dass der Verkehrsteilnehmer, für den die grafische Botschaft bestimmt ist, diese auch wahrnehmen kann. Gleichzeitig ermöglicht das Nachführen die Wahl eines kleineren Raumwinkels, also eines kleineren Bereichs aus dem die grafische Botschaft sichtbar ist. Folglich werden auch weniger unbeteiligte Verkehrsteilnehmer durch die grafische Botschaft irritiert oder fehlgeleitet. Das Verfahren lässt sich alternativ oder zusätzlich zu den gesetzlich vorgeschriebenen Anzeigemitteln wie Leuchten oder Blinker realisieren. Insbesondere wird zumindest eine grafische Botschaft bei einem direkten Blick auf die Fahrzeugoberfläche, insbesondere auf einen an sich nichtdurchsichtigen Bereich des Fahrzeugs, von außen sichtbar.

Die Veränderung des mindestens einen Winkelparameters des Raumwinkels kann kontinuierlich, insbesondere nahezu kontinuierlich mittels Winkelstufen kleiner als 5° oder kleiner als 10°, oder diskret, z.B. durch zwei oder drei Schritte, z.B. größer als 20° ausgestaltet sein. Mit anderen Worten: Der Raumwinkel kann sich während der Ausführung des Verfahrens kontinuierlich oder in kleinen kaum wahrnehmbaren Stufen verändern. Die Veränderung kann dabei auch zwischen der Anzeige zweier aufeinanderfolgender Einzelbilder erfolgen, insbesondere derart, dass zwei aufeinander folgende Einzelbilder derart schnell verändert werden, dass der Beobachter keine Unterbrechung der Anzeige merkt.

Das bedeutet, dass in einer Umgebung und/oder Verkehrssituation eine grafische Botschaft, z.B. im Raumwinkel von - 20° bis - 35° zur Längsachse zu sehen ist. Bei einer Änderung der Verkehrssituation ändern sich auch die Winkeln und/oder andere oben beschriebenen Anzeigeparameter, sodass die grafische Botschaft dann z.B. im Raumwinkel von -5° bis +30° sichtbar wird.

Der Raumwinkel wird mithilfe von einem oder mehreren Winkelparametern bestimmt, diese Winkel stellen die Begrenzungen des Raumwinkels dar. Diese können sein:
- begrenzender Winkel im Uhrzeigersinn **ϕ₁**
- begrenzender Winkel gegen Uhrzeigersinn **ϕ₂**
- begrenzender Winkel noch oben **θ₁**
- begrenzender Winkel nach unten **θ₂**

Alternativ können diese auch z.B. mittels eines zentralen, für die Ausrichtung eines Winkelbereichs kennzeichnenden Winkels und/oder eines für die Ausdehnung des Raumwinkels kennzeichnenden, insbesondere eines vertikalen, horizontalen oder radialen Öffnungswinkels bestimmt bzw. beschrieben werden. Durch einen Raumwinkel wird somit ein Bereich im Raum aufgespannt. Die Winkel können in einem polaren oder kugelförmigen Koordinatensystem verstanden werden, wobei sich der Koordinatenursprung in einer Anzeige, im Inneren des Fahrzeugs hinter der Anzeige oder außerhalb des Fahrzeugs und der Anzeige befinden kann.

Die grafische Botschaft kann ausschließlich aus Text bestehen oder auch aus einer Sequenz von grafischen Botschaften zusammengesetzt sein, wobei die Reihenfolge der grafischen Botschaften in der Sequenz logische und/oder kausale und/oder räumliche Zusammenhänge, insbesondere im Bezug auf die aktuelle Verkehrssituation bzw. Anordnung von Objekten, veranschaulicht.

In einer Weiterbildung wird das Verändern des Raumwinkels auch in in Abhängigkeit von einem oder mehreren odometrischen Parametern des Fahrzeugs ausgestaltet, insbesondere der Geschwindigkeit des Fahrzeugs, und/oder der aktuellen Fahrsituation und/oder einer Ausführung einer bestimmten Art eines Fahrmanövers durchgeführt. Die Fahrsituation kann dabei z.B. Stadtfahrt, Einparksituation, Schnellstraßen, sein. Bei den Arten der Manöver kann es sich z.B. um ein Einfädeln in eine Schnellstraße oder in eine Spur, einen Überholvorgang, ein Wendemanöver sein. Für andere stillstehende Verkehrsteilnehmer kann so die grafische Botschaft für sie wahrnehmbar angezeigt werden.

Das Verändern des Raumwinkels wird auch in Anhängigkeit von einer realen und/oder vorausgesagten Bewegung mindestens eines Verkehrsteilnehmers durchgeführt, insbesondere derart, dass der Raumwinkel an die Position eines Verkehrsteilnehmers angepasst wird und/oder der Bewegung des Verkehrsteilnehmers folgt. In einem vorteilhaften Fall berücksichtigt die Veränderung des Raumwinkels die relative Bewegung des anzeigenden Fahrzeugs zu dem Verkehrsteilnehmer, dem die grafische Botschaft angezeigt werden soll.

Somit kann eine grafische Botschaft speziell nur für einen Verkehrsteilnehmer angezeigt werden, sodass diese für ihn trotz seiner Relativbewegung zum Fahrzeug, insbesondere ohne wahrnehmbare Unterbrechungen, angezeigt wird. Die Erfassung des Verkehrsteilnehmers kann dabei mit, insbesondere sensorischen, Mitteln des Fahrzeugs, z.B. eine Kamera, Radar, Lidar, etc. insbesondre mit einem Objekterkennungsverfahren, erfolgen.

In einer bevorzugten Ausgestaltung des Verfahrens wird eine grafische Botschaft, insbesondere eine automatisch erzeugte Warnung einem Verkehrsteilnehmer angezeigt dem eine sichere oder wahrscheinliche Kollision mit dem Fahrzeug droht, ohne dabei weitere Verkehrsteilnehmer mit dieser Warnung zu irritieren, eine für andere Verkehrsteilnehmer missverständliche grafische Botschaft abzusenden oder diese abzulenken.

In einer Weiterentwicklung wird der Raumwinkel in Abhängigkeit von einem in der nahen Vergangenheit, insbesondere innerhalb der letzten 1, 2, 5, 10, 20, 30 Sekunden, vom Fahrzeug angenommenen Positionen und/oder vom Fahrzeug ausgeführten Manöver und/oder von der Bewegungstrajektorie des Fahrzeugs bestimmt.

Eine Bewegungstrajektorie kann auch eine Fahrzeugdrehung, Neigung oder Kippung umfassen.

Somit kann die grafische Botschaft speziell für Verkehrsteilnehmer angezeigt werden für die, insbesondre infolge des Manövers oder der Bewegungstrajektorie, diese grafische Botschaft besonders relevant ist. So kann eine informierende grafische Botschaft für einen seitlichen Bereich des Fahrzeugs angezeigt werden, die bei einem Spurwechsel hilfreich ist, abhängig von einer in der nahen Vergangenheit erfolgten Einfahrt in eine Schnellstraße.

Besonders vorteilhaft ist auch die Anzeige einer grafischen Botschaft für einen Verkehrsteilnehmer, der sich unmittelbar hinter dem Fahrzeug bewegt. Ein besonderer Vorteil begründet sich dabei mit einer erhöhten Unfallgefahr die durch das Bremsen des Fahrzeugs entstehen könnte und damit, dass das Fahrzeug in bestimmten Situationen - z.B. bei einem Überholvorgang - die Sicht nach vorne für den Verkehrsteilnehmer verdecken kann.

Eine warnende oder informierende grafische Botschaft kann für ein hinterherfahrendes, insbesondere bei einem Überholvorgang auf einer Landstraße unmittelbar dem eigenen Fahrzeug folgendes, Fahrzeug signalisiert werden. Der Raumwinkel verändert sich in den einzelnen Phasen des Überholvorgangs derart, dass ein hinterher folgender Verkehrsteilnehmer beim Blick auf das Fahrzeug zumindest nahezu ununterbrochen eine für ihn bestimmte grafische Botschaft sehen kann, während die anderen Verkehrsteilnehmer von dieser grafischen Botschaft nicht gestört, irritiert oder abgelenkt werden.

In einer Weiterentwicklung basiert das Verändern des Raumwinkels auch auf zwei oder mehrere Positionen des Fahrzeugs aus der nahen Vergangenheit. Vorteilhafterweise wird der Raumwinkel aus welchem zumindest eine, zwei oder mehrere grafische Botschaften sichtbar sind, selbsttätig in Abhängigkeit von den früheren Fahrzeugposition vor, insbesondere höchstens 1, 2, 3, 10, 20, 40 Sekunden, angepasst. Somit wird die grafische Botschaft z.B. speziell aus der Richtung eines evt. hinterherfahrenden Fahrzeugs gesehen.

Die Fahrzeugpositionen können in diesem Fall auch als Koordinaten, die z.B. mit Berücksichtigung von GPS-Koordinaten aus verschiedenen Zeitpunkten aus naher Vergangenheit ermittelt worden sind, und/oder als die Fahrzeugausrichtung aufgefasst werden.

Besonders vorteilhaft ist in diesem Sonderfall, dass hierzu keine sensorische Detektion eines anderen, insbesondere unmittelbar hinterherfahrenden, Verkehrsteilnehmers notwendig ist (die nicht in jedem Fahrzeug gleichermaßen verfügbar sein kann). Die grafische Botschaft kann in einem Raumwinkel angezeigt werden, aus dem speziell der denkbare, bzw. mit einer hohen Wahrscheinlichkeit in einer bestimmten Richtung relativ zum Fahrzeug vorhandene Empfänger dieser grafischen Botschaft kommt.

In einer weiteren Weiterentwicklung umfasst das Verfahren das Anzeigen einer zweiten oder weiteren graphischen Botschaften, insbesondere vom selben Fahrzeugbereich aus, wobei jeder graphischen Botschaft ein Raumwinkel zugeordnet ist, aus dem die jeweilige grafische Botschaft sichtbar ist, nicht aber die andere beziehungsweise anderen grafischen Botschaften; wobei sich die Raumwinkel zumindest in einem Winkelparameter unterscheiden.

Somit können zwei oder mehrere grafische Botschaften angezeigt werden, wobei zumindest eine davon ihren Raumwinkel verändert, so dass diese z.B. einem Verkehrsteilnehmer automatisch folgt, während die andere beziehungsweise anderen grafischen Botschaften z.B. nur in einem fest definierten Raumwinkel angezeigt werden.

Es können zwei und mehrere grafische Botschaften derart angezeigt werden, dass zumindest zwei zugeordnete Raumwinkel sich zumindest in einem Winkelparameter in Abhängigkeit von den vorausbestimmten Kriterien verändern.

Es kann dieselbe grafische Botschaft in zwei Raumwinkeln angezeigt werden, wobei zumindest ein Raumwinkel sich in Abhängigkeit von den vorausbestimmten Kriterien in zumindest einem Winkelparameter verändert.

In einer Variante unterscheiden sich die zugeordneten Raumwinkel von zumindest zwei grafischen Botschaften nur in einem Höhenwinkel.

Hierbei kann es sich insbesondere um mindestens zwei, insbesondere durch denselben Grund angezeigte grafische Botschaften handeln. Z.B. kann ein möglicher Zusammenstoß mit einem Fußgänger angezeigt werden. Die grafischen Botschaften können für Raumwinkel mit verschiedenen vertikalen Winkelparametern angezeigt werden und sich in der geometrischen Gestalt, insbesondre in ihren Proportionen, in der Symbolik, in einem zugeordneten Zeitintervall, in dem diese angezeigt werden, voneinander unterscheiden.

Insbesondere wird dabei auch ein gemessener oder ein geschätzter Abstand zu einem Verkehrsteilnehmer berücksichtigt, der die Anzeige sehen soll.

Somit können z.B. bei einem drohenden Zusammenstoß mit einem Fußgänger, der mit Mitteln des Fahrzeugs automatisch erkannt wird, unterschiedlich geartete grafische Botschaften angezeigt werden: Einmal für ein Kind mit einer geringen Größe und einmal für einen deutlich größeren Erwachsenen. Bei einem Kind wird die grafische Botschaft dem Verständnis und dem Verhalten eines Kindes (z.B. in einer für ihn verständlichen symbolischen Form) entsprechend angezeigt, während für den Erwachsenen z.B. eine Textbotschaft angezeigt wird. Die grafischen Botschaften können sich im Zeitintervall, in dem diese angezeigt werden, unterscheiden, sodass eine erwachsene Person eine deutlich spätere warnende grafische Botschaft erhält, als ein Kind in derselben Entfernung zum Fahrzeug. Es können auch z.B. 3 oder 5 verschiedene Varianten einer grafischen Botschaft, insbesondere zur gleichen Zeit oder schnell abwechselnd angezeigt werden. Der Inhalt zumindest einer grafischen Botschaft kann fortlaufend, insbesondere in Abhängigkeit von vorausbestimmten Kriterien, neu bestimmt werden.

In einem anderen Beispiel wird eine grafische Botschaft einem Fahrer eines hinterherfahrendem PKW angezeigt, während einem Fahrer eines weiter hinterher fahrendem LKW, der sich im Wesentlich in derselben Richtung vom Fahrzeug befindet, eine andere oder eine anders gestaltete grafische Botschaft angezeigt wird.

Somit kann das Verfahren auch ohne eine oft kostspielige und gegebenenfalls fehlerbehaftete sensorische Objektklassifizierung mindestens zwei unterschiedliche grafische Botschaften an Objekte unterschiedlicher Klassen anzeigen.

In einer Weiterentwicklung umfasst die eine oder die mehreren grafischen Botschaften, ein Symbol, Text, eine Kontur (insbesondere Objektkontur), eine oder mehrere mit einer oder mehreren Texturen gefüllte Fläche oder Flächen.

In einer Weiterentwicklung wird das Anzeigen mithilfe einer Anzeige ausgeführt, die Mikroprismen, Mikrolinsen oder lentikuläre optische Elemente umfasst.

Eine einfachste und hinreichend effektive Realisierung der Anzeige besteht in der Nutzung der TFT-Displaytechnologie zusammen mit einer Lentikulärtechnologie (Wackelbildtechnologie). Bei dieser kann es sich z.B. um eine Prismen- oder Zylinderoptikfolie handeln, welche die Abbildung von bestimmten Pixeln in eine andere Richtung lenkt als die Abbildung von anderen bestimmten Pixeln des Displays. Durch die Ansteuerung bestimmter Pixel des Displays kann eine Abbildung für eine vorausbestimmte Richtung erzeugt werden (diese wird zusammengestellt aus den in diese Richtung abgelenkten Pixellichtern), sodass diese von anderen Verkehrsteilnehmer als eine im Wesentlichen zusammenhängende Grafik wahrgenommen wird. Eine solche Anzeigevorrichtung kann z.B. in einen Teil der Fahrzeugoberfläche oder sichtbar bzw. durchscheinend unter der Fahrzeugoberfläche verbaut sein. Alternativ kann die Anzeigevorrichtung als eine Projektion (z.B. ähnlich einem Beamer) ausgestaltet sein, der insbesondere hinter einer Prismen- und/oder Zylinderoptikschicht verbaut ist. Das Prinzip der Darstellung und der Richtungsabhängigkeit kann dabei wie oben beschrieben sein. Besonders vorteilhaft ist eine solche Ausgestaltung, bei der die Oberfläche des Fahrzeugs, hinter welcher die Anzeigevorrichtung verbaut ist, aus einer bestimmten Richtung als eine opake Oberfläche erscheint, wenn aus dieser Richtung zu der Zeit keine grafische Botschaft Richtung dargestellt wird.

Zwei oder mehrere grafischen Botschaften können auch mit zeitlichen Unterbrechungen, insbesondere alternierend, z.B. abwechselnd, nacheinander, angezeigt werden.

Vorteilhafterweise werden dabei die zwei oder mehreren grafischen Botschaften zumindest teilweise mittels derselben Pixel oder Leuchtmittel erzeugt. Diese werden dabei je nach Reihenfolge der Darstellung für die eine oder die andere grafische Botschaft angesteuert.

Die Zeitintervalle können dabei derart gewählt werden, dass der Beobachter das schnelle ein- und Ausschalten zumindest einer grafischen Botschaft nicht merkt. Z.B. können so zwei Beobachter aus zwei Richtungen jeweils die für sie bestimmten grafischen Botschaften permanent eingeblendet sehen. Dies ist in etwa mit der Wirkung von Videosequenzen vergleichbar, welche aus Einzelbildern bzw. einem Nachleuchten bestimmter Bildschirmbereiche bestehen aber vom Beobachter als zusammenhängend und nicht etwa aufblitzend wahrgenommen werden.

Die grafischen Botschaften können insbesondere mittels einer richtungsabhängigen Aussendung einer bestimmten Lichtmenge erzeugt werden, wobei diese in vielen unterschiedlichen Richtungen unterschiedliche Lichtwerte besitzt, so dass diese zur Erzeugung eines Eindrucks einer grafischen Botschaft beim Beobachter ausreichen, der sich im entsprechenden Raumwinkel befindet. Es nehmen die Lichteigenschaften der Strahlen, die eine grafische Botschaft bilden, z.B. in mindestens 500, 1000, 5000 verschiedenen Richtungen, innerhalb des Raumwinkels unterschiedliche Werte zur selben Zeit oder in einem sehr kurzen Zeitintervall an.

Die Leistung, insbesondere die Lichtleistung, die die Anzeigevorrichtung aussendet kann im Betrieb durchschnittlich unter 100, 200, 400, 800 Im (Lumen) betragen. Bereits diese Leistung kann ausreichen um die erforderliche Information an andere Verkehrsteilnehmer mittels grafischer Botschaften zu kommunizieren. Somit ist eine sehr viel geringere Leistung und ein geringer Energieverbrauch erforderlich als bei Vorrichtungen, die etwa einer selektiven Ausleuchtung der Umgebung oder einer Signalisierung durch eine Ausleuchtung umgebender Objekte dienen.

Alternativ oder zusätzlich können in der Anzeigevorrichtung zur Erzeugung grafischer Botschaften andere Technologien, insbesondere Lasertechnologien, eingesetzt sein. Diese können ein z.B. nur aus einer Richtung sichtbares Muster, z.B. unter Nutzung der Interferenzeigenschaften des kohärenten Laserlichts und/oder mittels Nutzung einer Maske, die bestimmte Teile des eingestrahlten Lichts nur aus bestimmten Richtung sichtbar macht, erzeugen.

Alternativ oder zusätzlich kann das Verfahren mittels einer, insbesondere lokal unterschiedlichen Beeinflussung von Lichtabsorptions- oder Lichtbrechungseigenschaften, erfolgen.

In einer Weiterentwicklung umfasst das Anzeigen der grafischen Botschaft die lokale Veränderung der Reflexionseigenschaften und/oder Absorptionseigenschaften und/oder Interferenzeigenschaften des, insbesondere des aus Richtung des Raumwinkels, einfallenden Lichts.

Das Verfahren kann derart ausgestaltet sein, dass die grafische Botschaft mittels Beeinflussung von Lichtabsorptions- oder Lichtbrechungseigenschaften erzeugt wird. Zum Beispiel kann das Verfahren als eine Kombination aus optischer Vorrichtung, die den Strahlengang ort- oder winkelspezifisch beeinflusst und einem oder mehreren Elementen ausgestaltet sein, die Lichtabsorptionseigenschaften und/oder Lichtreflexionseigenschaften aufweisen. Die Beeinflussung der Lichtabsorptionseigenschaften und/oder Lichtreflexionseigenschaften und/oder Interferenzeigenschaften kann dabei eine lokale Ortsabhängigkeit aufweisen. Dabei bildet sich die grafische Botschaft, die in einen Raumwinkel angezeigt wird, als Muster aus unterschiedlich stark reflektiertem Licht und/oder aus unterschiedlich stark absorbiertem Licht aus. Dabei kann es sich insbesondere um das Licht, weiches im Wesentlichen aus dem entsprechenden Raumwinkel kommt, handeln. Anders formuliert: Es kann auch das Licht von den Leuchten eines anderen Verkehrsteilnehmers sein, dem die grafische Botschaft angezeigt wird. Die Lichtquelle des anderen Verkehrsteilnehmers liefert das für die Anzeige benötige Licht, was insbesondere durch Reflexion erreicht wird. Alternativ können andere Technologien, insbesondere Lasertechnologien eingesetzt werden.

In einer Weiterentwicklung beinhaltet die graphische Botschaft eine, insbesondere als Bildfolge dargestellte Information, die zumindest: eine Aktionsaufforderung für einen anderen Verkehrsteilnehmer, und/oder eine Vorankündigung einer eigenen Aktion oder eines möglichen Vorhabens, und/oder eine Informationsmitteilung für einen anderen Verkehrsteilnehmer beinhaltet.

Der Inhalt der grafischen Botschaften kann z.B. sein: Einladung zum Spurwechseln; Vorabankündigungen über das Vorhaben des Fahrzeugs; Geschwindigkeitsangaben; Spezielles Warnzeichen mit Erklärung des Warngrundes; Mitteilung über eine Auffälligkeit am Nachbarfahrzeug, z.B. Text "Licht?"; So kann z.B. ein Informationshinweis "Baby am Bord" nur dann und nur in eine bestimmte Richtung durch eine sonst verdunkelte Oberfläche erscheinen, wenn aus dieser Richtung ein anderen Fahrzeug sich zu schnell nähert bzw. überholt.

Das Verfahren kann auch beim Stillstand des Fahrzeugs und bei Bus-Sleep angewandt. So können Begrüßungsbotschaften beim Schließen/Öffnen in Richtung des Funkschlüssels abgegeben werden. Auch ein geparktes Fahrzeug wäre besser vor möglichen Rämplern geschützt, wenn es z.B. ein Parkzeichen oder eine andere situationsabhängige grafische Botschaft in Richtung anderer Fahrzeuge anzeigen würde.

In einer Weiterentwicklung hängt der Inhalt und/oder die zeitliche Sequenz der graphischen Botschaft von der automatisch ermittelten Sichtbarkeit eines Verkehrsteilnehmers für den Fahrer des Fahrzeugs ab, wobei die Sichtbarkeit unter Berücksichtigung einer der folgenden Parameter ermittelt wird: Einstellung von Spiegelpositionen und/oder der Kamerasysteme des Fahrzeugs; eine zumindest teilweise Verdeckung des Verkehrsteilnehmers, insbesondere hinter den Säulen des Fahrzeugs und/oder hinter weiteren Objekten in der Umgebung des Fahrzeugs.

In einer weiteren Weiterentwicklung wird der Raumwinkel und/oder der Inhalt der graphischen Botschaft abhängig von dem mit Mitteln des Fahrzeugs erfassten Fahrerzustand und/oder einer Fahreraufmerksamkeit und/oder Fahrerblickrichtung bestimmt.

In einer anderen Weiterentwicklung wird die graphische Botschaft zumindest aus einem Raumwinkel dreidimensional angezeigt.

In einer Variante ist die graphische Botschaft nur in einem bestimmten, zumindest aus einer Richtung angezeigten, Entfernungsbereich sichtbar.

Somit wird die grafische Botschaft lediglich in einem bestimmten Entfernungsbereich von/bis z.B. 10 Meter, 20 Meter, 50 Meter vom Fahrzeug scharf abgebildet. Im anderen Entfernungsbereichen kann die grafische Botschaft nur in einer z.B. wesentlich reduzierteren Form erscheinen. Insbesondere kann eine grafische Botschaft eine derartige Zusammensetzung von hohen und tiefen Ortsfrequenzen beinhalten, dass diese je nach Beobachtungsabstand als wesentlich unterschiedliche grafische Botschaften wahrgenommen wird. Eine ähnliche Wirkung auf den Beobachter ist in einem völlig anderen Kontext bekannt, z.B. von einigen Gemälden von Salvador Dali. Diese lassen je nach Beobachtungsentfernung unterschiedliche Inhalte erscheinen.

Vorteilhafterweise lässt sich dies mit Mitteln der Strahlenbrechung, insbesondre einer Fokussierung, realisieren. Durch den Schärfeverlust ist diese außerhalb dieser Bereiche nicht mehr vollumfänglich sichtbar und somit verliert oder verändert die Grafik zumindest einen wesentlichen Teil der Information.

Es kann eine Interaktion mit dem Benutzer vorgesehen sein. Diese kann auch derart gestaltet sein, dass die Richtung, in welche eine grafische Botschaft angezeigt werden soll, vom Benutzer, insbesondere aus einer automatisch erzeugten Vorauswahl, wählbar ist. In einer Weiterbildung dieses Verfahrens kann der Benutzer sogar einzelne Verkehrsteilnehmer auswählen, für die der Hinweis angezeigt werden soll. Dies kann z.B. mittels eines Bildschirms erfolgen, auf dem eine zumindest schematisch abgebildete Fahrzeugumgebung und/oder Fahrzeug dargestellt wird, sodass der Benutzer, z.B. mittels eines Drehknopfs oder mittels der Touchscreenfunktion des Bildschirms oder mittels einer Gestiksteuerung eine oder mehrere anzuzeigenden grafischen Botschaften auswählen kann, die insbesondere in eine bestimmte Richtung relativ zum eigenen Fahrzeug oder explizit in Richtung einer bestimmten Fahrspur oder eines bestimmten Verkehrsteilnehmers angezeigt werden soll.

In einem anderen Aspekt umfasst eine Vorrichtung zur richtungsadaptiven Signalisierung, insbesondere durch ein Fahrzeug: Eine Anzeige, die dazu eingerichtet ist, eine graphische Botschaft im Wesentlichen nur aus einem Raumwinkel sichtbar nach außen anzuzeigen, und die dazu eingerichtet ist, einen Winkelparameter des Raumwinkels während des Anzeigens der grafischen Botschaft zu verändern; Elektronische Verarbeitungsmittel; wobei die Vorrichtung dazu eingerichtet ist, eines der oben dargestellten Verfahren auszuführen. Die elektronischen Verarbeitungsmittel können ein Mikroprozessor, ein Computer sein, oder speziell für den vorliegenden Zweck ausgelegte Schaltkreise. Die Anwendung des Verfahrens auf ein Kraftfahrzeug ist auch deswegen vorteilhaft, weil moderne Kraftfahrzeuge über die notwendige Infrastruktur zur Umsetzung des Verfahrens verfügen und der wirtschaftliche Nutzen der hier beschriebenen Ausgestaltungsvarianten im Straßenverkehr besonders hoch ist.

Offenbart wird auch eine Recheneinheit zur Ausführung eines der oben offenbarten Verfahren sowie das Fahrzeug, in dem das entsprechende Verfahren ausgeführt wird. Es kann auch ein Computerprogramm, ein Computerprogrammprodukt mit einem Datenträger mit Programmcode und/oder einem ausführbaren Programm bereitgestellt werden, der bzw. das dazu ausgebildet ist, eines der oben beschriebenen Verfahren durchzuführen, wenn der Programmcode bzw. das ausführbare Programm auf einer entsprechend ausgebildeten Recheneinheit ausgeführt wird. Offenbart wird ebenfalls ein Produkt, das nachtäglich ins Fahrzeug eingebaut wird oder am Fahrzeug befestigt wird und insbesondere die Fahrzeuginfrastruktur (Stromversorgung, Daten, Signale) nutzt und dabei eines der oben dargestellten Verfahren ausführt.

Bei einer vorteilhaften Ausgestaltung des Verfahrens wird die Anzeigevorrichtung auf die Bekleidung eines Motorradfahrers befestigt oder ist als ein Teil dieser Bekleidung ausgestaltet. Bei der Darstellung der grafischen Botschaften wird dabei auch die relative Position des Motorradfahrers am Fahrzeug berücksichtigt. Somit kann das Verfahren auch bei Bewegungen des Motorradfahrers auf seinem Fahrzeug, die sensorisch erfasst werden, eine optimale Funktion im Sinne der oben beschriebenen Verfahren gewährleisten.

### KURZE BESCHREIBUNG DER ZEICHNUNGEN

Fig. 1 zeigt schematisch ein Fahrzeug mit einer Vorrichtung zum richtungsadaptiven Signalisieren.
Fig. 2 zeigt schematisch ein Fahrzeug mit einer Vorrichtung zum richtungsadaptiven Signalisieren gemäß einem Ausführungsbeispiel.
Fig. 3a bis 3d zeigen schematisch ein Fahrzeug in vier verschiedenen aufeinanderfolgenden Phasen eines Manövers gemäß einem Ausführungsbeispiel.

Gleiche Bezugszeichen beziehen sich auf sich entsprechende Elemente über die Figuren hinweg.

### DETAILLIERTE BESCHREIBUNG DER AUSFÜHRUNGSBEISPIELE

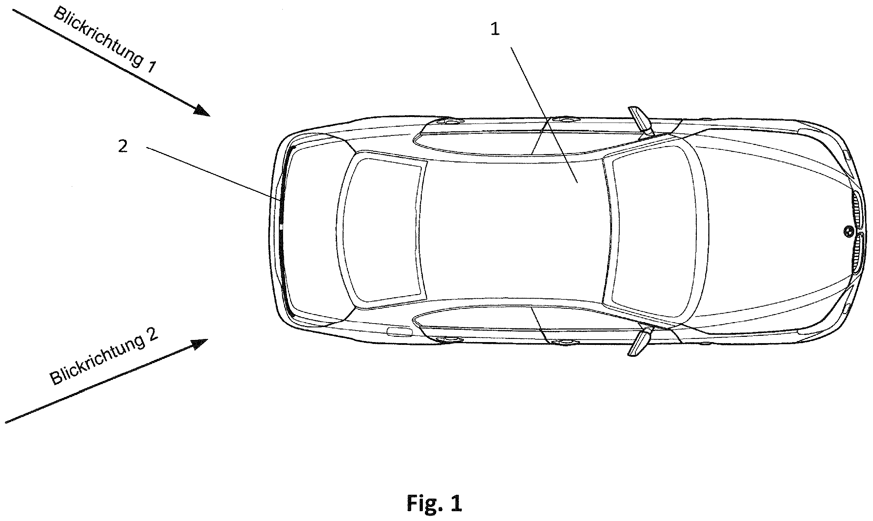

Fig. 1 zeigt schematisch ein Fahrzeug 1 mit einer am Heck des Fahrzeugs 1 angeordneten Anzeige 2, die dazu eingerichtet ist, eine graphische Botschaft im Wesentlichen nur aus einem Raumwinkel sichtbar nach außen anzuzeigen. Die Anzeige 2 kann beispielsweise in einem ersten Raumwinkel, in dem die Blickrichtung 1, aber nicht die Blickrichtung 2 liegt, eine grafische Botschaft anzeigen. Betrachtet ein anderer Verkehrsteilnehmer die Anzeige 2 aus der Blickrichtung 1, so kann er die grafische Botschaft sehen. Betrachtet der Verkehrsteilnehmer die Anzeige 2 aus der Blickrichtung 2, so kann er keine grafische Botschaft wahrnehmen.

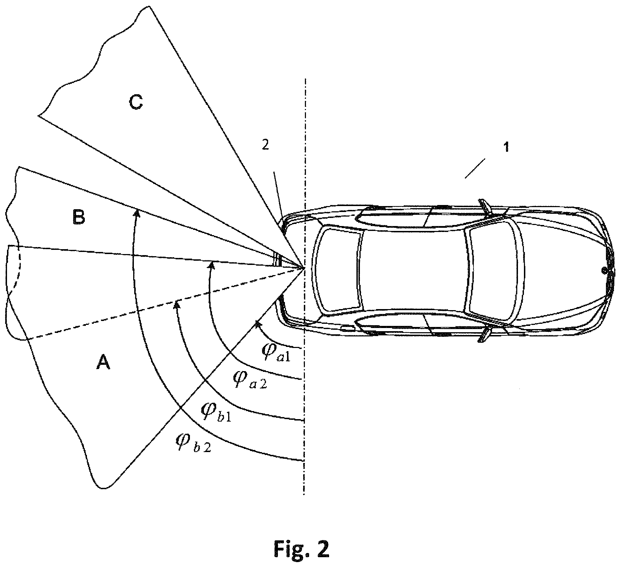

Fig. 2 zeigt schematisch das Fahrzeug 1 mit einer am Heck des Fahrzeugs 1 angeordneten Anzeige 2. Die Anzeige 2 ist dazu eingerichtet ist, eine graphische Botschaft im Wesentlichen nur aus einem Raumwinkel sichtbar nach außen anzuzeigen. Hier zeigt die Anzeige 2 dieselbe graphische Botschaft, beispielsweise ein Symbol oder Text, nacheinander zuerst im Raumwinkel "A", dann im Raumwinkel "B" und schließlich im Raumwinkel "C" an. Der Raumwinkel "A" reicht von dem Winkelparameter **ϕ**ₐ₁ bis **ϕ**ₐ₂. Der Raumwinkel "B" reicht vom Winkelparameter **ϕ**_{b1} bis **ϕ**_{b2}. Für den Raumwinkel "C" ist in diesem Beispiel zum Zweck der verständlichen Darstellung nicht explizit der Bereich der Winkelparameter angegeben.

Das Fahrzeug 1 bestimmt über Erfassungssysteme, wie Kameras, Lidar oder Radar, die Position des am Heck des Fahrzeugs von unten nach oben senkrecht vorbeifahrenden Fahrzeugs (nicht gezeigt). Aus dieser Position wird errechnet, in welchem Winkel der Fahrer des vorbeifahrenden Fahrzeugs auf die Anzeige 2 blicken kann. Ausgehend von diesem Winkel wird ein Raumwinkel bestimmt (hier: Raumwinkel "A" bis "C"), der um den bestimmten Blickwinkel beziehungsweise die Blickrichtung des vorbeifahrenden Fahrers herum gewählt wird. Der Raumwinkel kann so gewählt werden, dass eine gewisse Sicherheitsmarge einkalkuliert wird zum Ausgleichen von Messfehlern oder anderen Ungenauigkeiten. In Fig. 2 sind drei Raumwinkel angezeigt. Es kann auch vorgesehen sein, den Raumwinkel kontinuierlich anzupassen oder in wesentlich kleineren Schritten.

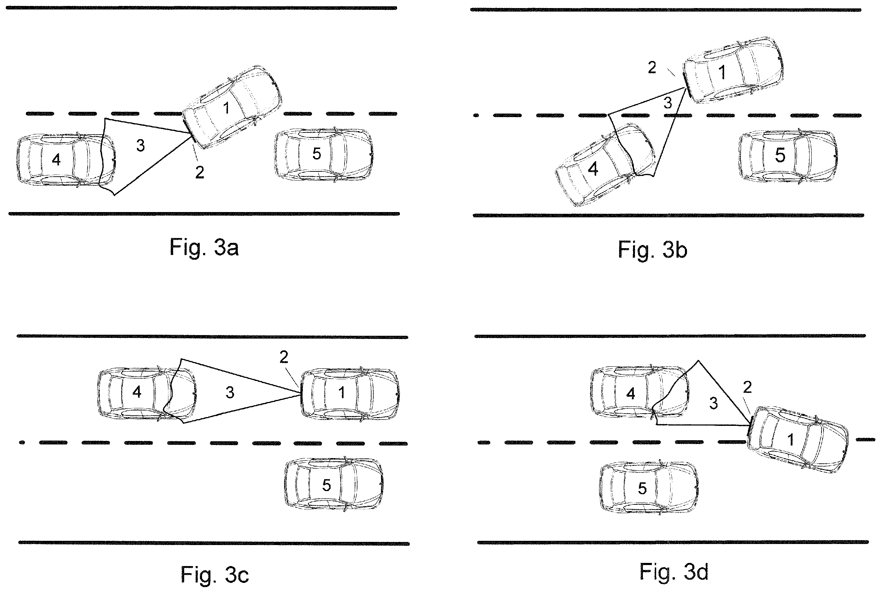

Die Fig. 3a bis 3d zeigen schematisch ein Fahrzeug 1 in vier verschiedenen aufeinanderfolgenden Phasen eines Manövers, in diesem Fall eines Überholmanövers, mit einer am Heck des Fahrzeugs 1 angeordneten Anzeige 2, die dazu eingerichtet ist, eine graphische Botschaft im Wesentlichen nur aus einem Raumwinkel 3 sichtbar nach außen anzuzeigen. Die Anzeige ist derart ausgestaltet, dass der Raumwinkel aus dem die grafische Botschaft sichtbar ist sich in Abhängigkeit von der Fahrzeugtrajektorie verändert. Somit ergibt sich der Vorteil, dass das Fahrzeug 4, welches dem Fahrzeug beim Überholmanöver folgt oder folgen könnte, die grafische Botschaft sehen kann, die speziell für dieses folgende Fahrzeug bestimmt ist.

Bei diesem Beispiel muss das Fahrzeug 4 nicht mittels Objekterkennung erfasst werden. Der Raumwinkel, in dem die grafische Botschaft sichtbar gemacht wird, errechnet sich in diesem Fall aus mehreren mit GPS und/oder mittels Radsensoren erfassten Fahrzeugpositionen aus naher Vergangenheit von 0,5 bis 60 Sekunden. Dabei wird auch die jeweilige Fahrzeugausrichtung zu verschiedenen Zeitpunkten berücksichtigt.

Somit wird eine grafische Botschaft, die für einen möglicherweise dem Fahrzeug 1 bei seinem Überholvorgang folgendes Fahrzeug bestimmt ist, stets derart angezeigt, dass sie aus der Perspektive dieses folgenden Fahrzeugs sichtbar ist.

Die grafische Botschaft enthält in diesem Fall z.B. eine automatisch sensorisch erfasste und schematisch dargestellte Verkehrssituation vor dem Fahrzeug 1. Diese hilft dem Fahrer des Fahrzeugs 4 die ggf. die für ihn nicht sichtbaren Objekte zu sehen und die Gefahr beim Folgen des Fahrzeugs 1 richtig einzuschätzen.

Durch die Begrenzung und Mitführung des Raumwinkels, aus dem die angezeigte Botschaft sichtbar ist, werden andere Verkehrsteilnehmer nicht durch die angezeigte Botschaft abgelenkt oder verunsichert. Gleichzeitig kann die Botschaft jedoch von dem vorbeifahrenden Fahrer wahrgenommen und verarbeitet werden.

Die grafischen Botschaften können an sich dreidimensional dargestellt werden. Diese können zumindest teilweise, aus der Blickrichtung des Beobachters, als innerhalb oder außerhalb der physikalischen Fahrzeugoberfläche befindlich erscheinen.

Ein Vorteil einer grafischen Botschaft, die sich in der Wahrnehmung des Beobachters zumindest teilweise außerhalb der Fahrzeugoberfläche befindet, besteht auch darin, dass:
- die wahrgenommenen Abmessungen des Fahrzeugs bei der Darstellung einer grafischen Botschaft in eine oder mehrere Richtungen größer erscheinen, ohne dass das Fahrzeug physikalisch eine solche Größe haben muss. Dies verringert auch den vom Beobachter wahrgenommenen Sicherheitsabstand, insbesondere während eine grafische Botschaft dargestellt wird, sodass dieser, z.B. früher bremsen oder besser ausweichen wird und mit einer höheren Wahrscheinlichkeit eine Kollision mit dem Fahrzeug vermeidet.

Ein Vorteil einer grafischen Botschaft, die sich in der Wahrnehmung des Beobachters zumindest teilweise innerhalb der Fahrzeugoberfläche befindet besteht auch darin, dass:
- eine bessere Gestaltungsmöglichkeit besteht, einen Unterschied in der wahrgenommenen Tiefe für die Darstellung der Information darzustellen;
- die Gestaltungsmöglichkeit für die Darstellung diverser Formen und/oder das Design der grafischen Botschaft als solche.

Im Falle einer an sich räumlich wahrgenommen grafischen Botschaft kann ein Teil der Anzeige innerhalb der physischen Oberfläche erscheinen, während ein anderer Teil außerhalb der physischen Oberfläche des Fahrzeugs erscheint. Im Falle der Darstellung einer an sich flach, aber räumlich angeordneten grafischen Botschaft besteht die Möglichkeit diese in einem optimalen Winkel zur Blickrichtung darzustellen. Diese Variante ist auch mit einem geringen Aufwand realisierbar.

Offenbart wird auch eine Recheneinheit zur Ausführung eines der oben dargestellten Verfahren sowie das Fahrzeug in dem das entsprechende Verfahren ausgeführt wird. Es kann auch ein Computerprogramm, ein Computerprogrammprodukt mit einem Datenträger mit Programmcode und/oder einem ausführbaren Programm bereitgestellt werden, der bzw. das dazu ausgebildet ist, das beschriebene Verfahren durchzuführen, wenn der Programmcode bzw. das ausführbare Programm auf einer entsprechend ausgebildeten Recheneinheit ausgeführt wird.

## Patentansprüche

1. Verfahren zur richtungsadaptiven Signalisierung durch ein Fahrzeug (1) umfassend:
Anzeigen einer graphischen Botschaft,
wobei die grafische Botschaft von außerhalb des Fahrzeugs beim Blick auf das Fahrzeug sichtbar ist und im Wesentlichen nur aus einem Raumwinkel (3) sichtbar ist,
Verändern des Raumwinkels in zumindest einem Winkelparameter während des Betriebs, insbesondere während die grafische Botschaft sichtbar ist;
**dadurch gekennzeichnet, dass**
das Verändern des Raumwinkels (3) auch in Abhängigkeit von einer realen
und/oder vorausgesagten Bewegung mindestens eines Verkehrsteilnehmers ausgestaltet ist, wobei die Erfassung des Verkehrsteilnehmers mit einem Objekterkennungsverfahren erfolgt.

2. Verfahren nach Anspruch 1, wobei
Das Verändern des Raumwinkels auch in (3) Anhängigkeit von einem oder mehreren odemetrischen Parametern des Fahrzeugs, (1) insbesondere der Geschwindigkeit des Fahrzeugs, und/oder der aktuellen Fahrsituation und/oder einer Ausführung einer bestimmten Art eines Fahrmanövers ausgestaltet ist.

3. Verfahren nach einem der vorhergehenden Ansprüche, wobei der Raumwinkel (3) in Abhängigkeit von einem in der nahen Vergangenheit, insbesondere innerhalb der letzten 1, 2, 5, 10, 20, 30 Sekunden, vom Fahrzeug angenommenen Positionen und/oder ausgeführten Manöver und/oder von der Bewegungstrajektorie des Fahrzeugs bestimmt wird.

4. Verfahren nach einem der vorhergehenden Ansprüche, wobei das Verändern des Raumwinkels (3)
auch auf zwei oder mehrere Positionen des Fahrzeugs aus der nahen Vergangenheit basiert.

5. Verfahren nach einem der vorhergehenden Ansprüche, ferner umfassend:
Anzeigen einer zweiten oder weiteren graphischen Botschaften, insbesondere vom selben Fahrzeugbereich aus, umfasst,
wobei jeder graphischen Botschaft ein Raumwinkel zugeordnet ist, aus dem die jeweilige grafische Botschaft sichtbar ist, nicht aber die andere beziehungsweise anderen grafischen Botschaften;
wobei sich die Raumwinkel zumindest in einem Winkelparameter unterscheiden.

6. Verfahren nach Anspruch 5,
wobei sich die Raumwinkel in einem Höhenwinkel unterscheiden.

7. Verfahren nach einem der vorhergehenden Ansprüche, wobei die eine oder die mehreren grafischen Botschaften, ein Symbol, Text, eine Kontur (insbesondere Objektkontur), eine oder mehrere mit einer oder mehreren Texturen gefüllte Fläche oder Flächen, umfassen.

8. Verfahren nach einem der vorhergehenden Ansprüche, wobei das Anzeigen mithilfe einer Anzeige (2)
ausgeführt wird, die Mikroprismen, Mikrolinsen oder
lentikuläre optische Elemente umfasst.

9. Verfahren nach einem der vorhergehenden Ansprüche, bei dem das Anzeigen der grafischen Botschaft die lokale Veränderung der Reflexionseigenschaften und/oder Absorptionseigenschaften und/oder Interferenzeigenschaften des, insbesondere des aus Richtung des Raumwinkels, einfallenden Lichts umfasst.

10. Verfahren nach einem der vorhergehenden Ansprüche, wobei die graphische Botschaft eine, insbesondere als Bildfolge dargestellte Information beinhaltet, die zumindest:
eine Aktionsaufforderung für einen anderen Verkehrsteilnehmer, und/oder eine Vorankündigung einer eigenen Aktion oder eines möglichen Vorhabens, und/oder
eine Informationsmitteilung für einen anderen Verkehrsteilnehmer beinhaltet.

11. Verfahren nach einem der vorhergehenden Ansprüche, bei dem:
Der Inhalt und/oder die zeitliche Sequenz der graphischen Botschaft abhängig von der automatisch ermittelten Sichtbarkeit eines Verkehrsteilnehmers für den Fahrer des Fahrzeugs abhängt, wobei die Sichtbarkeit unter Berücksichtigung einer der folgenden Parameter ermittelt wird:
Einstellung von Spiegelpositionen und/oder der Kamerasysteme des Fahrzeugs;
eine zumindest teilweise Verdeckung des Verkehrsteilnehmers, insbesondere hinter den Säulen des Fahrzeugs und/oder hinter weiteren Objekten in der Umgebung des Fahrzeugs.

12. Verfahren nach einem der vorhergehenden Ansprüche, wobei der Raumwinkel und/oder der Inhalt der graphischen Botschaft abhängig von dem mit Mitteln des Fahrzeugs erfassten Fahrerzustand und/oder einer Fahreraufmerksamkeit und/oder Fahrerblickrichtung bestimmt wird.

13. Verfahren nach einem der vorhergehenden Ansprüche, wobei die graphische Botschaft zumindest für einen Raumwinkel, insbesondere an sich, dreidimensional angezeigt wird.

14. Verfahren nach einem der vorangegangenen Ansprüche, wobei die graphische Botschaft nur in einem bestimmten, zumindest aus einer Richtung angezeigten, Entfernungsbereich sichtbar ist.

15. Vorrichtung zur richtungsadaptiven Signalisierung, insbesondere durch ein Fahrzeug, (1) umfassend:
Eine Anzeige, (2) die dazu eingerichtet ist, eine graphische Botschaft im Wesentlichen nur aus einem Raumwinkel (3) sichtbar nach außen anzuzeigen und
dazu eingerichtet ist, einen Winkelparameter des Raumwinkels während des Anzeigens der grafischen Botschaft zu verändern;
Elektronische Verarbeitungsmittel;
Mittel zur Erfassung des Verkehrsteilnehmers mit einem Objekterkennungsverfahren;
wobei die Vorrichtung dazu eingerichtet ist, ein Verfahren nach einem der vorhergehenden Ansprüche auszuführen.

16. Fahrzeug umfassend eine Vorrichtung nach Anspruch 15.

## Claims

1. Method for direction-adapted signalling by a vehicle (1), comprising:
display of a graphical message,
wherein the graphical message is visible from outside the vehicle when looking at the vehicle and is visible essentially only from one spatial angle (3),
alteration of at least one angle parameter of the spatial angle during operation, particularly while the graphical message is visible;
**characterized in that**
the alteration of the spatial angle (3) is also embodied on the basis of a real and/or predicted movement by at least one road user, the road user being detected using an object recognition method.

2. Method according to Claim 1, wherein
the alteration of the spatial angle (3) is also embodied on the basis of one or more odometric parameters of the vehicle (1), particularly the speed of the vehicle, and/or the present driving situation and/or execution of a particular type of driving manoeuvre.

3. Method according to either of the preceding claims, wherein the spatial angle (3) is determined on the basis of a position assumed and/or manoeuvre executed by the vehicle, and/or the movement trajectory of the vehicle, within the recent past, particularly within the last 1, 2, 5, 10, 20, 30 seconds.

4. Method according to one of the preceding claims, wherein the alteration of the spatial angle (3) is also based on two or more positions of the vehicle from the recent past.

5. Method according to one of the preceding claims, also comprising:
display of a second or further graphical message, particularly from the same vehicle region,
wherein each graphical message has an associated spatial angle from which the respective graphical message is visible, but not the other graphical message(s);
wherein the spatial angles differ at least in an angle parameter.

6. Method according to Claim 5,
wherein the spatial angles differ in an angle of elevation.

7. Method according to one of the preceding claims, wherein the one or more graphical messages comprise a symbol, text, a contour (particularly object contour), one or more area(s) filled with one or more textures.

8. Method according to one of the preceding claims, wherein the display is carried out using a display (2) that comprises microprisms, microlenses or lenticular optical elements.

9. Method according to one of the preceding claims, in which the display of the graphical message comprises the local alteration of the reflection properties and/or absorption properties and/or interference properties of the incident light, particularly the light that is incident from the direction of the spatial angle.

10. Method according to one of the preceding claims, wherein the graphical message contains an information item, particularly presented as an image sequence, that contains at least:
a call for action for another road user and/or
a prior announcement of an action of its own or of a possible intention and/or
an information notification for another road user.

11. Method according to one of the preceding claims, in which
the content and/or the time sequence of the graphical message is dependent on the automatically ascertained visibility of a road user for the driver of the vehicle, the visibility being ascertained by taking account of one of the following parameters:
setting of mirror positions and/or of the camera systems in the vehicle;
at least partial concealment of the road user, particularly behind the pillars of the vehicle and/or behind further objects in the surroundings of the vehicle.

12. Method according to one of the preceding claims, wherein the spatial angle and/or the content of the graphical message is determined on the basis of the driver condition detected using means in the vehicle and/or on the basis of a driver alertness and/or driver line of vision.

13. Method according to one of the preceding claims, wherein the graphical message is displayed in three dimensions, particularly per se, at least for a spatial angle.

14. Method according to one of the preceding claims, wherein the graphical message is visible only at a particular range of distance that is indicated at least from one direction.

15. Apparatus for direction-adapted signalling, particularly by a vehicle (1), comprising:
a display (2) that is designed to display a graphical message to the outside so as to be visible essentially only from one spatial angle (3) and is designed to alter an angle parameter of the spatial angle during display of the graphical message;
electronic processing means;
means for detecting the road user using an object recognition method;
wherein the apparatus is designed to carry out a method according to one of the preceding claims.

16. Vehicle comprising an apparatus according to Claim 15.

## Revendications

1. Procédé de signalisation adaptable à la direction par un véhicule (1), comprenant les étapes consistant à :
afficher un message graphique, le message graphique étant visible de l'extérieur du véhicule lorsqu'on regarde le véhicule et n'étant visible substantiellement qu'à partir d'un angle solide (3),
modifier l'angle solide au niveau d'au moins un paramètre d'angle en cours de fonctionnement, en particulier pendant que le message graphique est visible ;
**caractérisé en ce que** la modification de l'angle solide (3) est également configurée en fonction d'un mouvement réel et/ou prédit d'au moins un usager de la route, la détection de l'usager de la route étant effectué par un procédé de reconnaissance d'objets.

2. Procédé selon la revendication 1, dans lequel la modification de l'angle solide (3) est configurée également en fonction d'un ou de plusieurs paramètres odométriques du véhicule (1), en particulier de la vitesse du véhicule et/ou de la situation de conduite actuelle et/ou d'une exécution d'un certain type d'une manœuvre de conduite.

3. Procédé selon l'une quelconque des revendications précédentes, dans lequel l'angle solide (3) est déterminé en fonction de positions adoptées et/ou de manœuvres exécutées par le véhicule et/ou de la trajectoire de déplacement du véhicule dans un passé récent, en particulier dans les dernières 1, 2, 5, 10, 20, 30 secondes.

4. Procédé selon l'une quelconque des revendications précédentes, dans lequel la modification de l'angle solide (3) est également basée sur deux ou plusieurs positions du véhicule d'un passé récent.

5. Procédé selon l'une quelconque des revendications précédentes, comprenant en outre l'étape consistant à :
afficher un deuxième ou d'autres messages graphiques, en particulier provenant de la même zone de véhicule,
chaque message graphique étant associé à un angle solide à partir duquel le message graphique respectif est visible mais l'autre ou les autres messages graphiques ne sont pas visibles ;
les angles solides se distinguant au moins par un paramètre d'angle.

6. Procédé selon la revendication 5, dans lequel les angles solides se distinguent par un angle d'élévation.

7. Procédé selon l'une quelconque des revendications précédentes, dans lequel ledit un ou les plusieurs messages graphiques comprennent un symbole, du texte, un contour (en particulier un contour d'objet), une ou plusieurs surfaces remplies d'une ou de plusieurs textures.

8. Procédé selon l'une quelconque des revendications précédentes, dans lequel l'affichage est effectué à l'aide d'un dispositif affichage (2) qui comprend des microprismes, des microlentilles ou des éléments optiques lenticulaires.

9. Procédé selon l'une quelconque des revendications précédentes, dans lequel l'affichage du message graphique comprend la modification locale des propriétés de réflexion et/ou des propriétés d'absorption et/ou des propriétés d'interférence de la lumière incidente, en particulier provenant de la direction de l'angle solide.

10. Procédé selon l'une quelconque des revendications précédentes, dans lequel le message graphique contient une information représentée en particulier sous forme de séquence d'images qui contient au moins :
un appel à l'action pour un autre usager de la route, et/ou
un préavis d'une action individuelle ou d'une intention possible, et/ou
une communication d'informations pour un autre usager de la route.

11. Procédé selon l'une quelconque des revendications précédentes, dans lequel :
le contenu et/ou la séquence temporelle du message graphique dépend(ent) de la visibilité déterminée automatiquement d'un usager de la route pour le conducteur du véhicule, la visibilité étant déterminée en tenant compte d'un des paramètres suivants :
le réglage de positions de miroir et/ou des systèmes de caméra du véhicule ;
un recouvrement au moins partiel de l'usager de la route, en particulier derrière les montants du véhicule et/ou derrière d'autres objets dans l'environnement du véhicule.

12. Procédé selon l'une quelconque des revendications précédentes, dans lequel l'angle solide et/ou le contenu du message graphique est/sont déterminé(s) en fonction de l'état de conducteur détecté par des moyens du véhicule et/ou d'une attention du conducteur et/ou d'un regard du conducteur.

13. Procédé selon l'une quelconque des revendications précédentes, dans lequel le message graphique est affiché pour au moins un angle solide, en particulier de manière tridimensionnelle en soi.

14. Procédé selon l'une quelconque des revendications précédentes, dans lequel le message graphique n'est visible que dans une zone de distance déterminée, affichée à partir d'au moins une direction.

15. Dispositif de signalisation adaptable à la direction, en particulier par un véhicule (1), comprenant :
un dispositif d'affichage (2) qui est aménagé pour afficher vers l'extérieur un message graphique de manière visible substantiellement uniquement à partir d'un angle solide (3), et est aménagé pour modifier un paramètre d'angle de l'angle solide pendant l'affichage du message graphique ;
des moyens de traitement électroniques ;
des moyens pour détecter l'usager de la route par un procédé de reconnaissance d'objets ;
le dispositif étant aménagé pour exécuter un procédé selon l'une quelconque des revendications précédentes.

16. Véhicule, comprenant un dispositif selon la revendication 15.
